(19) **Europäisches Patentamt**
**European Patent Office**
**Office européen des brevets**

(11) **EP 4 564 717 A1**

(12) **EUROPEAN PATENT APPLICATION**
published in accordance with Art. 153(4) EPC

(43) Date of publication:
**04.06.2025 Bulletin 2025/23**

(51) International Patent Classification (IPC):
*H04L 5/00* (2006.01)     *H04W 24/10* (2009.01)
*H04W 72/04* (2023.01)

(21) Application number: **22952537.3**

(22) Date of filing: **29.07.2022**

(86) International application number:
**PCT/CN2022/109168**

(87) International publication number:
**WO 2024/021090 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Mingju**
**Beijing 100085 (CN)**

(74) Representative: **Dehns Germany Partnerschaft mbB**
**Theresienstraße 6-8**
**80333 München (DE)**

(54) **REPORTING NUMBER INDICATION METHOD AND APPARATUS, AND STORAGE MEDIUM**

(57) The present application relates to the field of mobile communications. Disclosed are a reporting number indication method and apparatus, and a storage medium. The method comprises: a terminal receiving configuration signaling, which is sent by a network device, wherein the configuration signaling is used for indicating a reporting number of a plurality of channel measurement resource sets, the plurality of channel measurement resource sets have the same reporting number, or, at least two of the plurality of channel measurement resource sets have different reporting numbers, and the reporting number is the number of frequency-domain basis vectors, which are reported by the terminal for the channel measurement resource sets, which correspond to the reporting number. A network device may configure, in combination with a plurality of channel measurement resource sets, a terminal with the number of frequency-domain basis vectors that is required to be reported, such that the terminal can then determine, according to the configured number of frequency-domain basis vectors that is required to be reported, a frequency-domain window for reporting the frequency-domain basis vectors, thereby expanding the ways in which the reporting of the number of frequency-domain basis vectors are configured, and guaranteeing the reliability of transmission.

FIG. 3

**Description**

**TECHNICAL FIELD**

The present disclosure relates to the field of mobile communications, and in particular to a method and apparatus for indicating a reporting quantity, and a storage medium.

**BACKGROUND**

In a mobile communication system, a network device configures a channel measurement resource set to provide services for a terminal, and the terminal further performs measurements based on the channel measurement resource set and reports the obtained measurement reports.

Specifically, the channel measurement resource set configured by the network device for the terminal corresponds to a quantity of frequency domain basis vectors that need to be reported, so that the terminal determines frequency domain basis vectors included in a frequency domain window according to the quantity of frequency domain basis vectors, and then carries the selected frequency domain basis vectors in the reported measurement report.

However, when the network device configures a plurality of channel measurement resource sets to provide services for the terminal, how to configure for the terminal the quantity of frequency domain basis vectors that need to be reported becomes an urgent problem to be solved.

**SUMMARY**

Embodiments of the present disclosure provide a method and apparatus for indicating a reporting quantity, and a storage medium, which expands a configuration manner of reporting a quantity of frequency domain basis vectors and ensures the reliability of transmission. The technical solution is as follows.

According to a first aspect of the present disclosure, there is provided a method for indicating a reporting quantity, which is performed by a terminal. The method includes:

receiving a configuration signaling sent by a network device, wherein the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

According to a second aspect of the present disclosure, there is provided a method for indicating a reporting quantity, which is performed by a network device. The method includes:

sending a configuration signaling to a terminal, wherein the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

According to a third aspect of the present disclosure, there is provided an apparatus for indicating a reporting quantity, including:

a receiving module, configured to receive a configuration signaling sent by a network device, wherein the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

According to a fourth aspect of the present disclosure, there is provided an apparatus for indicating a reporting quantity, including:

a sending module, configured to send a configuration signaling to a terminal, wherein the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

According to a fifth aspect of the present disclosure, there is provided a terminal, including a processor; a transceiver connected to the processor; and a memory configured to store executable instructions of the processor, wherein the processor is configured to load and execute the executable instructions to implement the method for indicating the reporting quantity as described in the above aspect.

According to a sixth aspect of the present disclosure, there is provided a network device, including a processor; a transceiver connected to the processor; and a memory configured to store executable instructions of the processor, wherein the processor is configured to load and execute the executable instructions to implement the method for indicating the reporting quantity as described in the above aspect.

According to a seventh aspect of the present disclosure, there is provided a communication system, including a terminal and a network device, wherein the terminal is configured to implement the method for indicating the reporting quantity as described in the first aspect above, and the network device is configured to implement the method for indicating the reporting quantity as described in the second aspect above.

According to an eighth aspect of the present disclosure, there is provided a computer readable storage medium having executable program codes stored thereon. The executable program codes are loaded and executed by a processor to implement the method for indicating the reporting quantity as described in the above aspect.

According to a ninth aspect of the present disclosure, there is provided a chip, including a programmable logic circuit and/or program instructions, wherein the chip, when running on a terminal or a network device, is configured to implement the method for indicating the reporting quantity as described in the above aspect.

According to a tenth aspect of present disclosure, there is provided a computer program product, which, when performed by a processor of a terminal or a network device, is configured to implement the method for indicating the reporting quantity as described in the above aspect.

In the solution provided in embodiments of the present disclosure, the network device can combine the plurality of channel measurement resource sets to configure for the terminal the quantity of frequency domain basis vectors that need to be reported, so that the terminal can determine the frequency domain window for reporting the frequency domain basis vector according to the configured quantity of frequency domain basis vectors that need to be reported, thereby expanding the configuration manner of reporting the quantity of frequency domain basis vectors and ensuring the reliability of transmission.

## BRIEF DESCRIPTION OF THE DRAWINGS

In order to clearly illustrate the technical solution of embodiments of present disclosure, a brief description of drawings used in the embodiments is given below. Obviously, the drawings in the following description are only part of the embodiments of present disclosure, and for those skilled in the art, other drawings can be obtained according to these drawings without inventive works.

FIG. 1 shows a block diagram of a frequency domain basis vector format provided by an embodiment of the present disclosure;
FIG. 2 shows a block diagram of a communication system provided by an embodiment of the present disclosure;
FIG. 3 shows a flowchart of a method for indicating a reporting quantity provided by an embodiment of the present disclosure;

FIG. 4 shows a flowchart of a method for indicating a window starting position provided by an embodiment of the present disclosure;
FIG. 5 shows a flowchart of a method for indicating a window starting position provided by an embodiment of the present disclosure;
FIG. 6 shows a block diagram of an apparatus for indicating a reporting quantity provided by an embodiment of the present disclosure;
FIG. 7 shows a block diagram of another apparatus for indicating a reporting quantity provided by an embodiment of the present disclosure;
FIG. 8 shows a block diagram of an apparatus for indicating a reporting quantity provided by an embodiment of the present disclosure;
FIG. 9 shows a block diagram of another apparatus for indicating a reporting quantity provided by an embodiment of the present disclosure; and
FIG. 10 shows a schematic structural diagram of a communication device provided by an embodiment of the present disclosure.

## DETAILED DESCRIPTION

In order to make the purpose, technical solution and advantages of present disclosure clearer, implementations of present disclosure will be further described in detail in combination with the accompanying drawings.

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following description of the embodiments do not represent all implementations consistent with the present disclosure. Instead, they are merely examples of apparatuses and methods consistent with some aspects related to the present disclosure as recited in the appended claims.

The terms used in embodiments of the present disclosure are merely for the purpose of describing particular embodiments and are not intended to limit the present disclosure. As used in the present disclosure and the appended claims, the singular forms "a", and "the" are intended to include the plural forms as well, unless the context clearly indicates otherwise. It should also be understood that the term "and/or" as used herein refers to and includes any or all possible combinations of one or more of the associated listed items.

It should be understood that, although the terms first, second, third, etc. may be used in the present disclosure to describe various information, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein can be interpreted as "upon" or "when" or "in response to determination".

It should be noted that information (including but not limited to user device information, user personal information, etc.), data (including but not limited to data for analysis, stored data, displayed data, etc.) and signals involved in the present disclosure are all authorized by users or fully authorized by all parties, and the collection, use and processing of relevant data must comply with relevant laws, regulations and standards of relevant countries and regions.

Several terms provided in embodiments of the present disclosure are briefly introduced first.

Reporting frequency domain basis vector: a network device can provide services for a terminal, and the network device can configure a Channel State Information (CSI) measurement configuration for the terminal. The terminal can perform CSI measurement based on the CSI measurement configuration and report a CSI measurement report to the network device. The CSI measurement reporting includes reporting of a Precoding Matrix Indicator (PMI), and the PMI includes the selection of frequency domain basis vector. The network device configures for the terminal a quantity M of frequency domain basis vectors that need to be reported (i.e., reporting the frequency domain basis vector), then the terminal needs to report to the base station which M frequency domain units are selected from frequency domain units included in a system bandwidth as the frequency domain basis vectors, that is, report positions of the M frequency domain basis vectors.

Frequency domain window: when the number of frequency domain units included in the system bandwidth is greater than 19, in order to reduce signaling overhead, the terminal needs to select M frequency domain basis vectors from the frequency domain window and inform the network device. A length of the frequency domain window is twice the quantity M of frequency domain basis vectors that need to be reported, that is, the length of the frequency domain window is 2M. That is, the terminal needs to select M frequency domain units from 2M frequency domain units and inform the base station of the positions of the M frequency domain units.

The CSI measurement report includes the selection of frequency domain basis vector. First, the network device configures for the terminal the quantity M of frequency domain basis vectors reported. When the number of frequency domain basis vectors contained in the system bandwidth is greater than 19, it is necessary to select M frequency domain basis vectors from the frequency domain window to reduce the reporting overhead. The length of the frequency domain window includes 2M frequency domain basis vectors. In addition, candidate positions for a window starting position of the frequency domain window are {-2M+1, -2M+2,... 0 }, 0 is the last frequency domain basis vector, -1 is the second to last frequency domain basis vector, and so on. The window starting position is equivalent to the selected first frequency domain basis vector, so it is necessary to continue to indicate to select M-1 frequency domain basis vectors from 2M-1 frequency domain basis vectors as frequency domain basis vectors.

In some embodiments, the frequency domain basis vector may also become a frequency domain unit, which is limited in embodiments of the present disclosure.

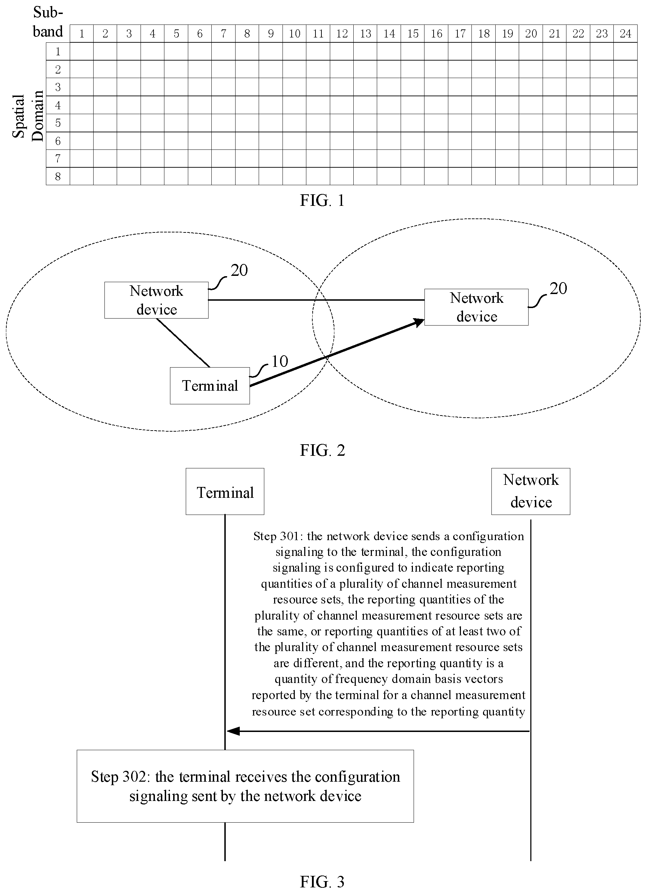

For example, in FIG. 1, when the terminal reports the determined frequency domain basis vectors, it determines some frequency domain basis vectors from 24 frequency domain basis vectors included in FIG. 1, and the explanation is made by taking M as 4 as an example. A value of a window starting position includes {-7, -6...0}. If the determined value is -6, that is, the sixth from the last, that is, frequency domain basis vector 19 is a starting position of a frequency domain window, that is, the determined first frequency domain basis vector, so the 2M frequency domain basis vectors included in the frequency domain window include frequency domain basis vector 19, frequency domain basis vector 20, frequency domain basis vector 21, frequency domain basis vector 22, frequency domain basis vector 23, frequency domain basis vector 24, frequency domain basis vector 1 and frequency domain basis vector 2. When the terminal reports, it first indicates the window starting position, and then indicates other M-1 frequency domain unit positions.

The following is an explanation of application scenarios of the present disclosure.

FIG. 2 shows a block diagram of a communication system provided by an embodiment of the present disclosure. The communication system may include a terminal 10 and a network device 20.

There may be several terminals 10. One or more terminals 10 may be disposed in a cell managed by each network device 20. The terminal 10 may include various handheld devices, on-board devices, wearable devices, computing devices with wireless communication functions or other processing devices connected to wireless modems, as well as various forms of user equipment (UEs), mobile stations (MSs), etc. For the convenience of description, in the embodiments of present disclosure, the devices mentioned above are collectively referred to as terminals.

The network device 20 is a device deployed in an access network to provide the terminal 10 with a wireless communication function. For the convenience of description, in embodiments of the present disclosure, the above-mentioned devices that provide wireless communication functions for the terminal 10 are collectively referred to as network devices. A connection can be established between the network device 20 and the terminal 10 through an air interface, so that communication is performed through the connection, including the interaction of signaling and data. There may be several network devices 20, and two adjacent network devices 20 can also communicate with each other in a wired or wireless manner. The terminal 10 can transmit data with different network devices 20, that is, establish connections with different network devices 20.

The network device 20 may include various forms of macro base stations, micro base stations, relay stations, access points, and the like. In systems using different radio access technologies, names of devices with network device functions may be different, for example, in the 5G New Radio (NR) system, they are called gNodeBs or gNBs. As the communication technology evolves, the designation "network device" may change.

In some embodiments, the network device 20 is provided with at least two Transmission Reception Points (TRPs). Alternatively, each of at least two network devices 20 is provided with at least one TRP, that is, the at least two network devices 20 are provided with the at least two TRPs. That is, the at least two TRPs may come from the same cell or different cells.

In some embodiments, the network device 20 is provided with four TRPs, and provides the services for the terminal 10 through the four TRPs, and the terminal 10 needs to perform CSI measurement reporting for the four TRPs.

The "5GNR system" in embodiments of the present disclosure may also be referred to as a 5G system or an NR system. But those skilled in the art can understand its meaning. The technical solution described in the embodiments of the present disclosure may be applicable to the 5G NR system, and may also be applicable to the subsequent evolution system of the 5G NR system.

FIG. 3 shows a flowchart of a method for indicating a reporting quantity provided by an embodiment of the present disclosure, which can be exemplarily applied to the terminal and the network device shown in FIG. 2. The method includes at least part of the following contents.

In step 301, the network device sends a configuration signaling to the terminal, the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

In step 302, the terminal receives the configuration signaling sent by the network device.

In an embodiment of the present disclosure, the network device and the terminal will communicate, the network device will configure the channel measurement resource set for the terminal, and will also indicate the reporting quantity of each channel measurement resource set, which refers to the quantity of frequency domain basis vectors reported by the terminal for the measurement resource set corresponding to the reporting quantity. That is, the network device indicates to the terminal through the configuration signaling the quantity of frequency domain basis vectors that the terminal needs to report for each channel measurement resource set. In addition, the terminal will also determine a length of a frequency domain window based on the reporting quantity, and then determine, based on the frequency domain window, the frequency domain basis vectors included in the frequency domain window, and then report the frequency domain basis vectors selected from the frequency domain basis vectors included in the frequency domain window.

The network device configures the plurality of channel measurement resource sets for the terminal, and the reporting quantities of the plurality of channel measurement resource sets may be the same or different, that is, the quantities of frequency domain basis vectors reported by the terminal for the plurality of channel measurement resource sets can be the same or different.

In some embodiments, each of the plurality of channel measurement resource sets corresponds to one TRP, that is, the plurality of channel measurement resource sets correspond to a plurality of TRPs. In other words, the network device can provide services to the terminal through the plurality of TRPs.

In some embodiments, the configuration signaling includes a channel resource set identifier corresponding to the reporting quantity, and the channel resource set identifier is used to indicate that the channel resource set uses the corresponding reporting quantity.

For the network device to indicate the reporting quantities of the plurality of channel measurement resource sets through the configuration signaling, the following two cases are included.

First case: the reporting quantities of the plurality of channel measurement resource sets are the same.

In an embodiment of the present disclosure, the network device indicates one reporting quantity through the configuration signaling, and this reporting quantity is applicable to the plurality of channel measurement resource sets. In addition, the terminal can determine the length of the frequency domain window according to the reporting quantity, that is, the determined length of the frequency domain window is also applicable to the plurality of channel measurement resource sets.

For example, the plurality of channel measurement resource sets include channel measurement resource set 1, channel measurement resource set 2, channel measurement resource set 3, and channel measurement resource set 4. The network device configures a reporting quantity A for the terminal through the configuration signaling, and this reporting quantity A is applicable to channel measurement resource set 1, channel measurement resource set 2, channel measurement resource set 3, and channel measurement resource set 4.

Second case: the reporting quantities of the at least two of the plurality of channel measurement resource sets are different.

In an embodiment of the present disclosure, the network device configures, through the configuration signaling, different reporting quantities for the at least two of the plurality of channel measurement resource sets of the terminal, that is, different channel measurement resource sets among the plurality of channel measurement resource sets use different reporting quantities.

In some embodiments, the number of reporting quantities is the same as the number of channel measurement resource sets, or the number of reporting quantities is less than the number of channel measurement resource sets.

If the number of reporting quantities is less than the number of channel measurement resource sets, it means that there are several channel measurement resource sets sharing one reporting quantity, and there are other channel measurement resource sets using other reporting quantities.

For example, the plurality of channel measurement resource sets include channel measurement resource set 1, channel measurement resource set 2, channel measurement resource set 3, and channel measurement resource set 4. The network device configures, through the configuration signaling, a reporting quantity A for channel measurement resource set 1 and channel measurement resource set 2 of the terminal, a reporting quantity B for channel measurement resource set 3, and the reporting quantity C for channel measurement resource set 4.

In some embodiments, at least two channel measurement resource sets among the plurality of channel measurement resource sets include different CSI-RS resources, or the at least two channel measurement resource sets among the plurality of channel measurement resource sets include different port groups of the same CSI-RS resource.

In an embodiment of the present disclosure, a channel measurement resource set includes at least one Channel State Information Reference Signal (CSI-RS) resource, and at least two channel measurement resource sets include different CSI-RS resources. Alternatively, a channel measurement resource set includes at least one port group, at least two channel measurement resource sets include different port groups, and all port groups included in the channel measurement resource sets belong to the same CSI-RS resource.

In some embodiments, the configuration signaling is further configured to indicate reporting quantities of a plurality of transmission layers, the reporting quantities of the plurality of transmission layers are the same, or reporting quantities of at least two of the plurality of transmission layers are different.

There is a mapping relationship between the channel measurement resource set and the transmission layer. For example, one channel measurement resource set corresponds to one or more transmission layers, which is not limited in embodiments of the present disclosure.

It should be noted that in an embodiment of the present disclosure, in a case where the configuration information is configured to indicate the reporting quantities of the plurality of transmission layers, if for each channel measurement resource set, the quantities of frequency domain basis vectors that need to be reported on its plurality of transmission layers are the same, then for all transmission layers, the method in the embodiment of the present disclosure is used to determine one quantity of frequency domain basis vectors that need to be reported corresponding to each channel measurement resource set, and report a position of a frequency domain basis vector corresponding to each channel measurement resource set. If for each channel measurement resource set, the quantities of frequency domain basis vectors that need to be reported on its plurality of transmission layers are different, then for each transmission layer, the method in the embodiment of the present disclosure is used to determine one quantity of frequency domain basis vectors that need to be reported corresponding to each channel measurement resource set, and report a position of a frequency domain basis vector corresponding to each channel measurement resource set.

It should be noted that the steps executed by the terminal in embodiments of the present disclosure can independently form a new embodiment, and the steps executed by the network device can also independently form a new embodiment, which are not limited by the present disclosure.

The present disclosure provides a solution for configuring the reporting quantity, and the network device can combine the plurality of channel measurement resource sets to configure for the terminal the quantity of frequency domain basis vectors that need to be reported, so that the terminal can determine, according to the configured quantity of frequency domain basis vectors that need to be reported, the frequency domain window for reporting the frequency domain basis vector, thereby expanding the configuration manner of reporting the quantity of frequency domain basis vectors and ensuring the reliability of transmission.

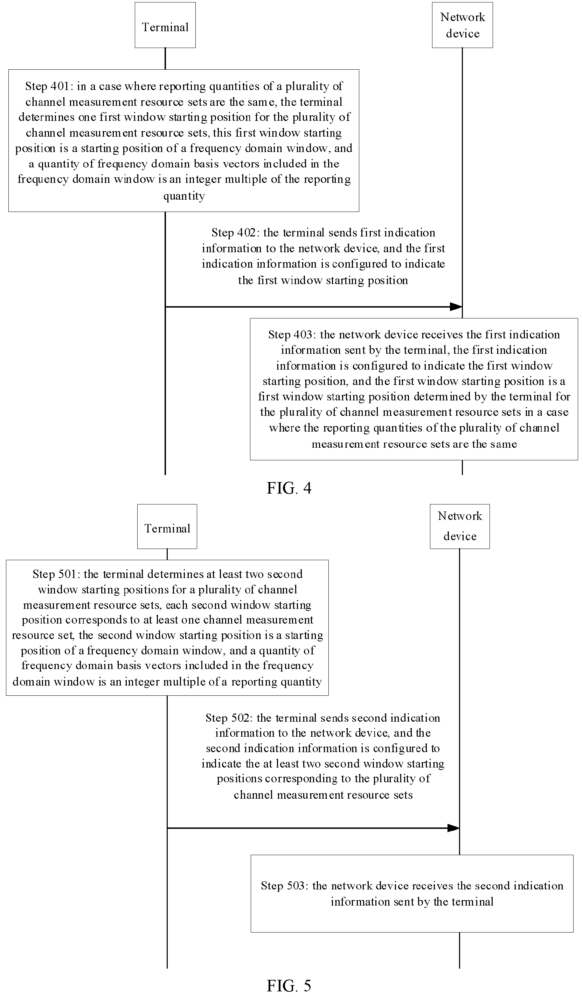

An embodiment shown in FIG. 3 illustrates that a network device can indicate reporting quantities of a plurality of channel measurement resource sets for a terminal through a configuration signaling. Below, it is explained how the terminal determines a length of a frequency domain window based on the configured reporting quantity, and uses the same window starting position to report the frequency domain basis vector to the network device. FIG. 4 shows a flowchart of a method for indicating a window starting position provided by an embodiment of the present disclosure, which can be exemplarily applied to the terminal and the network device as shown in FIG. 2. The method includes at least part of the following contents.

In step 401, in a case where reporting quantities of a plurality of channel measurement resource sets are the same, the terminal determines one first window starting position for the plurality of channel measurement resource sets, this first window starting position is a starting position of a frequency domain window, and a quantity of frequency domain basis vectors included in the frequency domain window is an integer multiple of the reporting quantity.

In an embodiment of the present disclosure, if the reporting quantities of the plurality of channel measurement resource sets are the same, it means that the plurality of channel measurement resource sets share the same reporting quantity. The terminal can determine the length of the frequency domain window according to the reporting quantity, that is, the plurality of channel measurement resource sets correspond to the same frequency domain window length. Then one first window starting position can be determined for the plurality of channel measurement resource sets, this first window starting position is the starting position of the frequency domain window, the length of this frequency domain window is a frequency domain window length determined based on the reporting quantity, and the quantity of frequency domain basis vectors included in the frequency domain window is an integer multiple of the reporting quantity. In addition, the plurality of channel measurement resource sets share the determined first window starting position. In other words, window starting positions of frequency domain windows corresponding to the plurality of channel measurement resource sets are all the first window starting position. The integer multiple is 2 times, 3 times or other values, which are not limited in embodiments of the present disclosure.

For example, the plurality of channel measurement resource sets include channel measurement resource set 1, channel measurement resource set 2, channel measurement resource set 3, and channel measurement resource set 4. Taking FIG. 1 as an example, first window starting positions of the four channel measurement resource sets are all frequency domain basis vector 19, or the first window starting positions of the four channel measurement resource sets are all frequency domain basis vector 20, or another frequency domain basis vector in another frequency domain window.

In step 402, the terminal sends first indication information to the network device, and the first indication information is configured to indicate the first window starting position.

In step 403, the network device receives the first indication information sent by the terminal, the first indication information is configured to indicate the first window starting position, and the first window starting position is a first window starting position determined by the terminal for the plurality of channel measurement resource sets in a case where the reporting quantities of the plurality of channel measurement resource sets are the same.

In an embodiment of the present disclosure, after the terminal determines, through the step 401, the first window starting position shared by the plurality of channel measurement resource sets, it can send to the network device the first indication information for indicating the first window starting position. After the network device receives the first indication information, it can determine the first window starting position of the frequency domain window of the plurality of channel measurement resource sets. The first window starting position is a position of a first frequency domain basis vector selected by the terminal in the window.

In some embodiments, when the number of reporting quantities is M, the determined frequency domain window length of the frequency domain window includes 2M frequency domain basis vectors. Therefore, when one first window starting position of the plurality of channel measurement resource sets is indicated, the number of bits required is $\lceil \log_2(2M) \rceil$, where $\lceil \cdot \rceil$ is rounded up.

It should be noted that embodiments of the present application describe that the plurality of channel measurement resource sets correspond to the same first window starting position. The terminal also needs to report to the network device other frequency domain basis vectors corresponding to each channel measurement resource set in the frequency domain window. Below, various manners for the terminal to report the frequency domain basis vector are described.

First manner: the first indication information is further configured to indicate positions of M-1 frequency domain basis vectors of at least one group of channel measurement resource sets, the M-1 frequency domain basis vectors belong to frequency domain basis vectors included in the frequency domain window and are different from a frequency domain basis vector corresponding to the first window starting position. M is the reporting quantity, and M is a positive integer. Each group of channel measurement resource sets includes at least one channel measurement resource set.

In some embodiments, the M-1 frequency domain basis vectors belong to frequency domain basis vectors among the 2M frequency domain basis vectors except the frequency domain basis vector corresponding to the first window starting position, and the 2M frequency domain basis vectors are frequency domain basis vectors included in the frequency domain window with the first window starting position as the starting point and a length of 2M.

In an embodiment of the present disclosure, the terminal may determine the positions of the M-1 frequency domain basis vectors of the at least one group of channel measurement resource sets. That is, the terminal may divide the plurality of channel measurement resource sets into the at least one group of channel measurement resource sets, and each group of channel measurement resource sets corresponds to the positions of the M-1 frequency domain basis vectors.

In addition, the positions of the M-1 frequency domain basis vectors corresponding to each group of channel measurement resource sets belong to frequency domain basis vectors among the 2M frequency domain basis vectors except the frequency domain basis vector corresponding to the first window starting position, that is, 2M-1 frequency domain basis vectors among the 2M frequency domain basis vectors except the frequency domain basis vector corresponding to the first window starting position.

In embodiments of the present disclosure, the reporting quantities of the plurality of channel measurement resource sets are the same, and the frequency domain window length is twice the reporting quantity, that is, the frequency domain window lengths corresponding to the plurality of channel measurement resource sets are the same. That is, the frequency domain basis vectors of each group of channel measurement resource sets are the M-1 frequency domain basis vectors selected from the same 2M-1 frequency domain basis vectors.

The 2M frequency domain basis vectors are all frequency domain basis vectors included in a frequency domain window with the first window starting position as the starting point, and a length of 2M. In addition, each group of channel measurement resource sets includes at least one channel measurement resource set.

In some embodiments, the first indication information only indicates positions of M-1 frequency domain basis vectors corresponding to one group of channel measurement resource sets, which means that the plurality of channel measurement resource sets are divided into one group of channel measurement resource sets, and the plurality of channel measurement resource sets share the same positions of the M-1 frequency domain basis vectors.

In some embodiments, $\left\lceil \log_2 \binom{2M-1}{M-1} \right\rceil$ bits are used to indicate the positions of the M-1 frequency domain basis vectors, where $\lceil . \rceil$ is rounded up.

In an embodiment of the present disclosure, the positions of the frequency domain basis vectors of the plurality of channel measurement resource sets determined by the terminal are the same, so the terminal determines the M-1 frequency domain basis vectors from the 2M-1 frequency domain basis vectors, and the determined positions of the M-1 frequency domain basis vectors are indicated by the first indication information. In other words, the frequency domain basis vectors of the plurality of channel measurement resource sets share the M-1 frequency domain basis vectors indicated by the first indication information. In other words, the M-1 frequency domain basis vectors of the first indication information are applicable to the plurality of channel measurement resource sets.

For example, taking FIG. 1 as an example, M is 4, the first window starting position of the frequency domain window determined by the terminal is frequency domain basis vector 19, and the 2M frequency domain basis vectors included in the frequency domain window are frequency domain basis vector 19, frequency domain basis vector 20, frequency domain basis vector 21, frequency domain basis vector 22, frequency domain basis vector 23, frequency domain basis vector 24, frequency domain basis vector 1 and frequency domain basis vector 2. Except frequency domain basis vector 19 as the window starting position, the terminal selects 3 frequency domain basis vectors from frequency domain basis vector 20, frequency domain basis vector 21, frequency domain basis vector 22, frequency domain basis vector 23, frequency domain basis vector 24, frequency domain basis vector 1 and frequency domain basis vector 2. For example, the selected three frequency domain basis vectors are frequency domain basis vector 20, frequency domain basis vector 21, and frequency domain basis vector 22, or frequency domain basis vector 22, frequency domain basis vector 23, and frequency domain basis vector 1. Examples are not given one by one in embodiments of the present disclosure.

In some other embodiments, the first indication information indicates positions of M-1 frequency domain basis vectors of a plurality of groups of channel measurement resource sets, which means that channel measurement resource sets included in the plurality of groups of channel measurement resource sets are the above plurality of channel measurement resource sets, and at least one channel measurement resource set included in each group of channel measurement resource sets shares the positions of the M-1 frequency domain basis vectors corresponding to this group of channel measurement resource sets. It can also be understood that at least two of the plurality of channel measurement resource sets correspond to different M-1 frequency domain basis vectors.

In an embodiment of the present disclosure, the terminal can determine M-1 frequency domain basis vectors for each group of channel measurement resource sets, that is, the terminal can respectively determine M-1 frequency domain basis vectors for one or more of the plurality of channel measurement resource sets, and respectively indicate, through first indication information, the positions of the M-1 frequency domain basis vectors of each group of channel measurement resource sets.

In some embodiments, the number of the plurality of groups of channel measurement resource sets determined by the terminal is the same as the number of the plurality of channel measurement resource sets, that is, one channel measurement resource set is one group, which can be understood that the terminal respectively determines M-1 frequency domain basis vectors for the plurality of channel measurement resource sets. Alternatively, the number of the plurality of groups of channel measurement resource sets determined by the terminal is less than the number of the plurality of channel measurement resource sets, that is, the terminal respectively determines different M-1 frequency domain basis vectors for at least two of the plurality of channel measurement resource sets.

2M-1 frequency domain basis vectors refer to other frequency domain basis vectors in the frequency domain window with the first window starting position as the starting point except for the frequency domain basis vector corresponding to the first window starting position. In other words, the terminal the selects M-1 frequency domain basis vectors from the 2M-1 frequency domain basis vectors for each group of channel measurement resource sets.

For example, the plurality of channel measurement resource sets include channel measurement resource set 1, channel measurement resource set 2, channel measurement resource set 3 and channel measurement resource set 4. Channel measurement resource set 1 and channel measurement resource set 2 are a group of channel measurement resource sets, channel measurement resource set 3 is a separate group of channel measurement resource sets, and channel measurement resource set 4 is a separate group of channel measurement resource sets.

Taking FIG. 1 as an example, M is 4, the first window starting position of the frequency domain window determined by the terminal is frequency domain basis vector 19, and the 2M frequency domain basis vectors included in the frequency domain window are frequency domain basis vector 19, frequency domain basis vector 20, frequency domain basis vector 21, frequency domain basis vector 22, frequency domain basis vector 23, frequency domain basis vector 24, frequency domain basis vector 1, and frequency domain basis vector 2. The M-1 frequency domain basis vectors determined by the terminal for channel measurement resource set 1 and channel measurement resource set 2 include frequency domain basis vector 20, frequency domain basis vector 21, and frequency domain basis vector 22, the M-1 frequency domain basis vectors determined by the terminal for channel measurement resource set 3 include frequency domain basis vector 22, frequency domain basis vector 23, and frequency domain basis vector 24, and the M-1 frequency domain basis vectors determined by the terminal for channel measurement resource set 4 include frequency domain basis vector 23, frequency domain basis vector 1, and frequency domain basis vector 2.

For another example, the plurality of channel measurement resource sets include channel measurement resource set 1, channel measurement resource set 2, channel measurement resource set 3 and channel measurement resource set 4. The terminal respectively determines M-1 frequency domain basis vectors for channel measurement resource set 1, determines M-1 frequency domain basis vectors for channel measurement resource set 2, determines M-1 frequency domain basis vectors for channel measurement resource set 3, and determines M-1 frequency domain basis vectors for channel measurement resource set 4.

Second manner: the first indication information includes a first part and a second part, the first part includes a position of the same frequency domain basis vector corresponding to the plurality of channel measurement resource sets, and the second part includes positions of different frequency domain basis vectors corresponding to each channel measurement resource set.

In an embodiment of the present disclosure, the first indication information may also indicate other frequency domain basis vectors other than the window starting position. For the plurality of channel measurement resource sets, after the first window starting position is indicated through the first indication information, it is also necessary to indicate the M-1 frequency domain basis vectors respectively corresponding to the plurality of channel measurement resource sets. Therefore, the same frequency domain basis vector corresponding to the plurality of channel measurement resource sets may be indicated through the first part of the first indication information, and positions of different frequency domain basis vectors corresponding to each of the plurality of channel measurement resource sets may be respectively indicated through the second part.

The positions of the different frequency domain basis vectors corresponding to each channel measurement resource set refer to positions of other frequency domain basis vectors except the same frequency domain basis vector indicated by the first part.

For example, the plurality of channel measurement resource sets include channel measurement resource set 1, channel measurement resource set 2, channel measurement resource set 3 and channel measurement resource set 4. The frequency domain basis vectors corresponding to channel measurement resource set 1 are frequency domain basis vector 20, frequency domain basis vector 21 and frequency domain basis vector 22. The frequency domain basis vectors corresponding to channel measurement resource set 2 are frequency domain basis vector 20, frequency domain basis vector 21 and frequency domain basis vector 23. The frequency domain basis vectors corresponding to channel measurement resource set 3 are frequency domain basis vector 20, frequency domain basis vector 21 and frequency domain basis vector 24. The frequency domain basis vectors corresponding to channel measurement resource set 4 are frequency domain basis vector 20, frequency domain basis vector 21 and frequency domain basis vector 1. Then the first part of the first indication information indicates that the same frequency domain basis vectors corresponding to the N channel measurement resource sets are frequency domain basis vector 20 and frequency domain basis vector 21, and the second part indicates that channel measurement resource set 1 corresponds to frequency domain basis vector 22, channel measurement resource set 2 corresponds to frequency domain basis vector 23, channel measurement resource set 3 corresponds to frequency domain basis vector 24, and channel measurement resource set 4 corresponds to frequency domain basis vector 1.

In the solution provided by embodiments of the present disclosure, the terminal indicates to the network device through the first indication information that the plurality of channel measurement resource sets share the same window starting position, and can also indicate, in different ways, other frequency domain basis vectors corresponding to the plurality of channel measurement resource sets, thereby expanding the diversity of the terminal reporting the selected frequency domain basis vector. In addition, the terminal determines the frequency domain window length according to the configured reporting quantity, and reports the frequency domain basis vector based on the frequency domain window length, thereby expanding the configuration manner of the reporting quantity and ensuring the reliability of transmission.

An embodiment shown in FIG. 3 illustrates that a network device can indicate reporting quantities of a plurality of channel measurement resource sets for a terminal through a configuration signaling. Below, it is explained how the terminal, based on the configured reporting quantity, uses different window starting positions to report frequency domain basis vectors to the network device. FIG. 5 shows a flowchart of a method for indicating a window starting position provided by an embodiment of the present disclosure, which can be exemplarily applied to the terminal and the network device as shown in FIG. 2. The method includes at least part of the following contents.

In step 501, the terminal determines at least two second window starting positions for a plurality of channel measurement resource sets, each second window starting position corresponds to at least one channel measurement resource set, the second window starting position is a starting position of a frequency domain window, and a quantity of frequency domain basis vectors included in the frequency domain window is an integer multiple of a reporting quantity.

In an embodiment of the present disclosure, the terminal determines the at least two second window starting positions for the plurality of channel measurement resource sets, each second window starting position corresponds to the at least one channel measurement resource set, that is, at least two of the plurality of channel measurement resource sets correspond to different second window starting positions.

The terminal can determine the frequency domain window length according to the configured reporting quantity, the determined at least two second window starting positions are the starting positions of the frequency domain windows, the length of the frequency domain window is the determined frequency domain window length, and the quantity of frequency domain basis vectors included in the frequency domain window is an integer multiple of the reporting quantity.

For example, the terminal determines two second window starting positions, which are respectively second window starting position 1 and second window starting position 2, and the plurality of channel measurement resource sets include 4 channel measurement resource sets, which are respectively channel measurement resource set 1, channel measurement resource set 2, channel measurement resource set 3, and channel measurement resource set 4. Then, channel measurement resource set 1, channel measurement resource set 2, and channel measurement resource set 3 may correspond to second window starting position 1, and channel measurement resource set 4 may correspond to second window starting position 2.

In step 502, the terminal sends second indication information to the network device, and the second indication information is configured to indicate the at least two second window starting positions corresponding to the plurality of channel measurement resource sets.

In step 503, the network device receives the second indication information sent by the terminal.

In an embodiment of the present disclosure, after determining the at least two second window starting positions, the terminal may send the second indication information to the network device, and the at least two second window starting positions corresponding to the plurality of channel measurement resource sets are indicated by the second indication information.

For the second indication information sent by the terminal, the terminal may indicate the at least two second window starting positions in different ways, and each way is described below.

First way: the second indication information is configured to indicate absolute positions of the at least two second window starting positions.

In an embodiment of the present disclosure, an absolute position of each second window starting position is indicated by the second indication information, and then after receiving the second indication information, the network device can determine positions of the at least two second window starting positions.

The absolute position refers to an actual position of each second window starting position. For example, taking FIG. 1 as an example, when M is 4, a value of the absolute position of the second window starting position includes {-7, -6...0}, that is, it can be indicated by 3 bits.

Second way: the second indication information is configured to indicate an absolute position of a reference window starting position among the at least two second window starting positions.

In an embodiment of the present disclosure, the terminal selects the reference window starting position from the determined at least two second window starting positions, indicates the absolute position of the reference window starting position through the second indication information, and other second window starting positions among the at least two second window starting positions except the reference window starting position are indicated according to the reference window starting position.

In some embodiments, the value of the absolute position of the reference window starting position includes {-7, -6...0}.

In some embodiments, the reference window starting position is the earliest starting position of the at least two second window starting positions.

In an embodiment of the present disclosure, the terminal determines the earliest starting position from the at least two second window starting positions as the reference window starting position, and other second window starting positions after the reference window starting position can be determined based on the reference window starting position. For example, the other second window starting positions are relative values relative to the reference window starting position.

In some embodiments, the second indication information is further configured to indicate a port group identifier of a CSI-RS resource or a CSI-RS resource identifier or a resource set identifier corresponding to the channel measurement resource set corresponding to the reference window starting position.

In an embodiment of the present disclosure, the second indication information also indicates the port group identifier of the CSI-RS resource or the CSI-RS resource identifier or the resource set identifier corresponding to the channel measurement resource set corresponding to the reference window starting position. Then, other second window starting positions among the at least two second window starting positions except the reference window starting position can be indicated in sequence from large to small or from small to large of the port group identifier of the CSI-RS resource or the CSI-RS resource identifier or the resource set identifier.

For example, if an embodiment of the present disclosure includes 4 channel measurement resource sets, there are 4 CSI-RS resources or 4 port group IDs of the CSI-RS resources, and the 4 CSI-RS resources or the 4 port group IDs of the CSI-RS resources need 2 bits for indication. When M is 4, 00 indicates that a window starting position corresponding to CSI-RS#1 is the reference window starting position.

In some embodiments, the second indication information is further configured to indicate other second window starting positions other than the reference window starting position, and the other second window starting positions are relative positions relative to the reference window starting position.

In an embodiment of the present disclosure, the terminal has indicated the reference window starting position through the second indication information, and also indicates the relative positions of other second window starting positions among the at least two second window starting positions except the reference window starting position relative to the reference window starting position.

Furthermore, after indicating the reference window starting position, the second indication information will also indicate other second window starting positions among the at least two second window starting positions except the reference window starting position. The specific indication manners include two manners.

In some embodiments, the second indication information is further configured to indicate other second window starting positions other than the reference window starting position, and the other second window starting positions are relative positions relative to the reference window starting position.

In an embodiment of the present disclosure, the second indication information has indicated an absolute value of the reference window starting position, and then indicates, relative to the reference window starting position, other second window starting positions among the at least two second window starting positions except the reference window starting position.

For example, a certain number of bits is used to indicate the port group identifier of the CSI-RS resource or the CSI-RS resource identifier or the resource set identifier corresponding to the channel measurement resource set corresponding to the reference window starting position, and then the following bits can sequentially indicate relative values of second window starting positions corresponding to other channel measurement resource sets relative to the reference window starting position.

For example, taking FIG. 1 as an example, after the bit value that indicates the port group identifier of the CSI-RS resource or the CSI-RS resource identifier or the resource set identifier corresponding to the channel measurement resource set corresponding to the reference window starting position, the next bits indicate a relative value of a window starting position of CSI-RS#0 to the reference window starting position - 7, and the value can be 0 to 7, so 3 bits are required; the next bits indicate a relative value of a window starting position of CSI-RS#2 to the reference window starting position -7, and the value can be 0 to 7, so 3 bits are also required; and the next bits indicate a relative value of a window starting position of CSI-RS#3 to the reference window starting position -7, and the value can be 0 to 7, so 3 bits are also required.

For another example, if the earliest reference window starting position is, for example, -3, the next bits indicate a relative value of a window starting position of CSI-RS#0 to the reference window starting position -3, and the value can be 0 to 3, so 2 bits are required; the next bits indicate a relative value of a window starting position of CSI-RS#2 to the reference window starting position -3, and the value can be 0 to 3, so 2 bits are also required; and the next bits indicate a relative value of a window starting position of CSI-RS#3 to the reference window starting position -3, and the value can be 0 to 3, so 2 bits are also required.

In some embodiments, the second indication information is further configured to indicate other second window starting positions except the reference window starting position. The i+1th second window starting position is a relative position relative to the i-th second window starting position, the i-th second window starting position is a window starting position that is located before the i+1th second window starting position and is closest to the i+1th second window starting position, i is a positive integer, and i is not greater than N-1.

For example, a certain number of bits is used to indicate the port group identifier of the CSI-RS resource or the CSI-RS resource identifier or the resource set identifier corresponding to the channel measurement resource set corresponding to the reference window starting position, and then the following bits can sequentially indicate that the starting position of the i+1th second window is a relative position relative to the i-th second window starting position.

For example, taking FIG. 1 as an example, after the bit value that indicates the port group identifier of the CSI-RS resource or the CSI-RS resource identifier or the resource set identifier corresponding to the channel measurement resource set corresponding to the reference window starting position, the next bits indicate CSI-RS#0 (2 bits) and a relative value of its window starting position to the reference window starting position -7, and the value range can be 0 to 7, so 3 bits are required, for example, the value is 2, that is, the window starting position is -5; the next bits indicate CSI-RS#2 (1 bit) and a relative value of its window starting position to -5, and the value can be 0 to 5, so 3 bits are also required, for example, the value is 2, that is, the window starting position is -3; and the next bits indicate a relative value of a window starting position of CSI-RS#3 (the last one, no indication is required) to -3, and the value can be 0 to 3, so 2 bits are required.

For another example, the earliest reference window starting position is -3, then the next bits indicate CSI-RS#0 (2 bits) and a relative value of its window starting position to the reference window starting position -3, and the value range can be 0 to 3, so 2 bits are required, for example, the value is 2, that is, the window starting position is -1; the next bits indicate CSI-RS#2 (1 bit) and a relative value of its window starting position to -1, and the value can be 0 to 1, so 1 bit is also required, for example, the value is 1, that is, the window starting position is 0; and the next bits indicates a relative value of a window starting position of CSI-RS#3 (the last one, no indication is required) to 0, and the value can be 0, so no bit is needed.

It should be noted that in an embodiment of the present disclosure, after the second window starting positions of the plurality of channel measurement resource sets are indicated by the second indication information, the M-1 frequency domain basis vectors can be further determined and reported according to the frequency domain window length.

In some embodiments, in a case where the reporting quantities of the plurality of channel measurement resource sets are the same, the second indication information is further configured to indicate positions of M-1 frequency domain basis vectors corresponding to each of at least one group of channel measurement resource sets, the M-1 frequency domain basis vectors belong to frequency domain basis vectors included in a frequency domain window corresponding to each channel measurement resource set, and are different from a frequency domain basis vector corresponding to a second window starting position corresponding to each group of channel measurement resource sets, each group of channel measurement resource sets includes at least one channel measurement resource set, M is the reporting quantity, and M is a positive integer.

In some embodiments, the M-1 frequency domain basis vectors belong to frequency domain basis vectors among the 2M frequency domain basis vectors corresponding to each group of channel measurement resource sets except the frequency domain basis vector corresponding to the second window starting position, the second window starting position is the window starting position corresponding to each group of channel measurement resource sets, and the 2M frequency domain basis vectors are frequency domain basis vectors included in a frequency domain window with the second window starting position as the starting point and a length equal to the frequency domain window length corresponding to each group of channel measurement resource sets.

The method of indicating the M-1 frequency domain basis vectors in the embodiment of the present application is similar to the method of using the same first window starting position in the above embodiments. The only difference is that in the embodiment of the present application, there are at least two channel measurement resource sets using different second window starting positions. That is, only the window starting position has changed, and the method of selecting the M-1 frequency domain basis vectors remains unchanged.

In some other embodiments, in a case where the reporting quantities of the at least two of the plurality of channel measurement resource sets are different, the second indication information is further configured to indicate positions of M-1 frequency domain basis vectors corresponding to each of at least one group of channel measurement resource sets, the M-1 frequency domain basis vectors belong to frequency domain basis vectors included in a frequency domain window corresponding to each channel measurement resource set, and are different from a frequency domain basis vector corresponding to a second window starting position corresponding to each group of channel measurement resource sets, each group of channel measurement resource sets includes at least one channel measurement resource set, M is the reporting quantity of each group of channel measurement resource sets, and M is a positive integer.

In some embodiments, the M-1 frequency domain basis vectors belong to frequency domain basis vectors among the 2M frequency domain basis vectors corresponding to each group of channel measurement resource sets except the frequency domain basis vector corresponding to the second window starting position, the second window starting position is the window starting position of each group of channel measurement resource sets, and the 2M frequency domain basis vectors are frequency domain basis vectors included in a frequency domain window with the second window starting position as the starting point and a length equal to the frequency domain window length corresponding to each group of channel measurement resource sets.

The method of indicating the M-1 frequency domain basis vectors in the embodiment of the present application is similar to the method of using the same first window starting position in the above embodiments. The only difference is that in the embodiment of the present application, there are at least two channel measurement resource sets using different second window starting positions and reporting quantities, and the frequency domain window length is determined according to the reporting quantity. That is, only the window starting position and the frequency domain window length have changed, and the method of selecting the M-1 frequency domain basis vectors remains unchanged.

It should be noted that the above-mentioned embodiments can be split into new embodiments, or combined with other embodiments to form new embodiments. The present disclosure does not limit the combination between the embodiments.

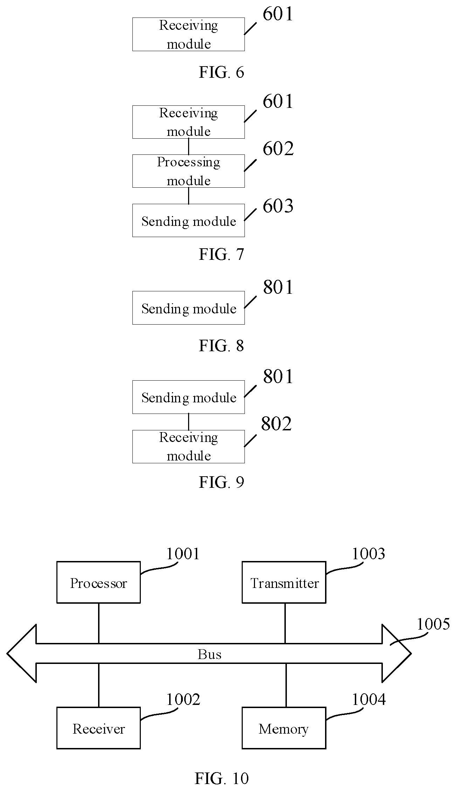

FIG. 6 shows a block diagram of an apparatus for indicating a reporting quantity provided by an embodiment of the present disclosure. Referring to FIG. 6, the apparatus includes:

a receiving module 601, configured to receive a configuration signaling sent by a network device, the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

In some embodiments, the at least two of the plurality of channel measurement resource sets contain different CSI-RS resources or the at least two of the plurality of channel measurement resource sets contain different port groups of the same CSI-RS resource.

In some embodiments, referring to FIG. 7, the apparatus further includes:

a processing module 602, configured to, in a case where the reporting quantities of the plurality of channel measurement resource sets are the same, determine one first window starting position for the plurality of channel measurement resource sets, the first window starting position is a starting position of a frequency domain window, and a quantity of frequency domain basis vectors included in the frequency domain window is an integer multiple of the reporting quantity; and

the receiving module 601, configured to send first indication information to the network device, and the first indication information is configured to indicate the first window starting position.

In some embodiments, the first indication information is further configured to indicate positions of M-1 frequency domain basis vectors of at least one group of channel measurement resource sets, the M-1 frequency domain basis vectors belong to the frequency domain basis vectors included in the frequency domain window, and are different from a frequency domain basis vector corresponding to the first window starting position, M is the reporting quantity, M is a positive integer, and each group of channel measurement resource sets includes at least one channel measurement resource set.

In some embodiments, the first indication information includes a first part and a second part; and
the first part includes a position of the same frequency domain basis vector corresponding to the plurality of channel measurement resource sets, and the second part includes positions of different frequency domain basis vectors corresponding to each channel measurement resource set.

In some embodiments, referring to FIG. 7, the apparatus further includes:

the processing module 602, configured to determine at least two second window starting positions for the plurality of channel measurement resource sets, each second window starting position corresponds to at least one channel measurement resource set, the second window starting position is a starting position of a frequency domain window, and a quantity of frequency domain basis vectors included in the frequency domain window is an integer multiple of the reporting quantity; and
a sending module 603, configured to send second indication information to the network device, and the second indication information is configured to indicate the at least two second window starting positions.

In some embodiments, the second indication information is configured to indicate absolute positions of the at least two second window starting positions.

In some embodiments, the second indication information is configured to indicate an absolute position of a reference window starting position among the at least two second window starting positions.

In some embodiments, the reference window starting position is an earliest starting position among the at least two second window starting positions.

In some embodiments, the second indication information is further configured to indicate a port group identifier of a CSI-RS resource or a CSI-RS resource identifier or a resource set identifier corresponding to a channel measurement resource set corresponding to the reference window starting position.

In some embodiments, the second indication information is further configured to indicate another second window starting position except the reference window starting position, and the other second window starting position is a relative position relative to the reference window starting position.

In some embodiments, in a case where the reporting quantities of the plurality of channel measurement resource sets are the same, the second indication information is further configured to indicate positions of M-1 frequency domain basis vectors respectively corresponding to each of at least one group of channel measurement resource sets, the M-1 frequency domain basis vectors belong to frequency domain basis vectors included in a frequency domain window corresponding to each channel measurement resource set, and are different from a frequency domain basis vector corresponding to a second window starting position corresponding to each group of channel measurement resource sets, each group of channel measurement resource sets includes at least one channel measurement resource set, M is the reporting quantity, and M is a positive integer; or

in a case where the reporting quantities of the at least two of the plurality of channel measurement resource sets are different, the second indication information is further configured to indicate the positions of the M-1 frequency domain basis vectors respectively corresponding to each of the at least one group of channel measurement resource sets, the M-1 frequency domain basis vectors belong to the frequency domain basis vectors included in the frequency domain window corresponding to each channel measurement resource set, and are different from the frequency domain basis vector corresponding to the second window starting position corresponding to each group of channel measurement resource sets, each group of channel measurement resource sets includes the at least one channel measurement resource set, M is a reporting quantity of each group of channel measurement resource sets, and M is a positive integer.

In some embodiments, the configuration signaling is further configured to indicate reporting quantities of a plurality of transmission layers, the reporting quantities of the plurality of transmission layers are the same, or reporting quantities of at least two of the plurality of transmission layers are different.

It should be noted that when implementing its functions, the apparatus provided in the above embodiments is only exemplified with division of the above-mentioned functional modules, and during a practical application, the above-mentioned functions may be allocated to be implemented by different functional modules according to requirements. That is, an internal structure of a device is divided into different functional modules to implement all or a part of the functions described above. In addition, the apparatus provided in the above embodiments has the same concept as the method embodiment, and reference may be made to the method embodiment for details of an implementation process of the apparatus, which is not described herein repeatedly anymore.

FIG. 8 shows a block diagram of an apparatus for indicating a reporting quantity provided by an embodiment of the present disclosure. Referring to FIG. 8, the apparatus includes:

a sending module 801, configured to send a configuration signaling to a terminal, the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

In some embodiments, the at least two of the plurality of channel measurement resource sets contain different Channel State Information Reference Signal (CSI-RS) resources or the at least two of the plurality of channel measurement resource sets contain different port groups of the same CSI-RS resource.

In some embodiments, referring to FIG. 9, the apparatus further includes:

a receiving module 802, configured to receive first indication information sent by the terminal, the first indication information is configured to indicate a first window starting position, the first window starting position is one first window starting position determined by the terminal for the plurality of channel measurement resource sets in a case where the reporting quantities of the plurality of channel measurement resource sets are the same, the first window starting position is a starting position of a frequency domain window, and a quantity of frequency domain basis vectors included in the frequency domain window is an integer multiple of the reporting quantity.

In some embodiments, the first indication information is further configured to indicate positions of M-1 frequency domain basis vectors of at least one group of channel measurement resource sets, the M-1 frequency domain basis vectors belong to the frequency domain basis vectors included in the frequency domain window, and are different from a frequency domain basis vector corresponding to the first window starting position, M is the reporting quantity, M is a positive integer, and each group of channel measurement resource sets includes at least one channel measurement resource set.

In some embodiments, the first indication information includes a first part and a second part; and

the first part includes a position of the same frequency domain basis vector corresponding to the plurality of channel measurement resource sets, and the second part includes positions of different frequency domain basis vectors corresponding to each channel measurement resource set.

In some embodiments, referring to FIG. 9, the apparatus further includes:

the receiving module 802, configured to receive second indication information sent by the terminal, the second indication information is configured to indicate at least two second window starting positions, each second window starting position corresponds to at least one channel measurement resource set, and the at least two window starting positions are determined by the terminal for the plurality of channel measurement resource sets.

In some embodiments, the second indication information is configured to indicate absolute positions of the at least two second window starting positions in a frequency domain window.

In some embodiments, the second indication information is configured to indicate an absolute position of a reference window starting position among the at least two second window starting positions.

In some embodiments, the reference window starting position is an earliest starting position among the at least two second window starting positions.

the second indication information is further configured to indicate a port group identifier of a CSI-RS resource or a CSI-RS resource identifier or a resource set identifier corresponding to a channel measurement resource set corresponding to the reference window starting position.

In some embodiments, the second indication information is further configured to indicate another second window starting position except the reference window starting position, and the other second window starting position is a relative position relative to the reference window starting position.

In some embodiments, in a case where the reporting quantities of the plurality of channel measurement resource sets are the same, the second indication information is further configured to indicate positions of M-1 frequency domain basis vectors respectively corresponding to each of at least one group of channel measurement resource sets, the M-1 frequency domain basis vectors belong to frequency domain basis vectors included in a frequency domain window corresponding to each channel measurement resource set, and are different from a frequency domain basis vector corresponding to a second window starting position corresponding to each group of channel measurement resource sets, each group of channel measurement resource sets includes at least one channel measurement resource set, M is the reporting quantity, and M is a positive integer; or

in a case where the reporting quantities of the at least two of the plurality of channel measurement resource sets are different, the second indication information is further configured to indicate the positions of the M-1 frequency domain basis vectors respectively corresponding to each of the at least one group of channel measurement resource sets, the M-1 frequency domain basis vectors belong to the frequency domain basis vectors included in the frequency domain window corresponding to each channel measurement resource set, and are different from the frequency domain basis vector corresponding to the second window starting position corresponding to each group of channel measurement resource sets, each group of channel measurement resource sets includes the at least one channel measurement resource set, M is a reporting quantity of each group of channel measurement resource sets, and M is a positive integer.

In some embodiments, the configuration signaling is further configured to indicate reporting quantities of a plurality of transmission layers, the reporting quantities of the plurality of transmission layers are the same, or reporting quantities of at least two of the plurality of transmission layers are different.

It should be noted that when implementing its functions, the apparatus provided in the above embodiments is only exemplified with division of abovementioned functional modules, and during a practical application, the above-mentioned functions may be allocated to be implemented by different functional modules according to requirements. That is, an internal structure of a device is divided into different functional modules to implement all or a part of the functions described above. In addition, the apparatus provided in the above embodiments has the same concept as the method embodiment, and reference may be made to the method embodiment for details of an implementation process of the apparatus, which is not described herein repeatedly anymore.

FIG. 10 shows a schematic structural diagram of a communication device provided by an embodiment of the present disclosure. The communication device includes: a processor 1001, a receiver 1002, a transmitter 1003, a memory 1004 and a bus 1005.

The processor 1001 includes one or more processing cores, and the processor 1001 executes various functional applications and information processing by running software programs and modules.

The receiver 1002 and the transmitter 1003 may be implemented as a communication component, which may be a communication chip.

The memory 1004 is connected to the processor 1001 through the bus 1005.

The memory 1004 may be configured to store at least one program code, and the processor 1001 may be configured to execute the at least one program code, so as to implement various steps in the foregoing method embodiments.

Additionally, the communication device may be a terminal or a network device. The memory 1004 may be implemented by any type or combination of volatile or non-volatile storage devices including, but not limited to, magnetic or optical disks, electrically erasable programmable Read-Only Memory (Erasable Programmable Read Only Memory, EEPROM), Erasable Programmable Read Only Memory (EPROM), Static Random Access Memory (SRAM), Read-Only Memory (Read -Only Memory, ROM), magnetic memory, flash memory, programmable read-only memory (Programmable Read-Only Memory, PROM).

In an embodiment, a computer-readable storage medium is also provided. The readable storage medium stores executable program codes, and the executable program codes are loaded and performed by a processor to implement the method for indicating the reporting quantity performed by the communication device provided in each of the above method embodiments.

In an embodiment, a chip is provided, which includes a programmable logic circuit and/or program instructions. When the chip runs on a terminal or a network device, it is used to implement the reporting quantity indication method provided in each method embodiment.

In an embodiment, a communication system is provided, which includes a terminal and a network device, the terminal is configured to implement the method for indicating the reporting quantity as described above, and the network device is configured to implement the method for indicating the reporting quantity as described above.

In an embodiment, a computer program product is provided. When the computer program product is performed by a processor of a terminal or a network device, it is configured to implement the method for indicating the reporting quantity provided by each of the above method embodiments.

Those of ordinary skill in the art can understand that all or part of the steps of implementing the above embodiments can be completed by hardware, or can be completed by instructing relevant hardware through a program, and the program can be stored in a computer-readable storage medium. The storage medium mentioned may be a read-only memory, a magnetic disk or an optical disk, etc.

The above are only optional embodiments of the present disclosure, and are not intended to limit the present disclosure. Any modifications, equivalent replacements, improvements, etc. made within the spirit and principles of the present disclosure shall be included in the protection of the present disclosure, within the range.

**Claims**

1. A method for indicating a reporting quantity, performed by a terminal, and comprising:
   receiving a configuration signaling sent by a network device, wherein the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

2. The method according to claim 1, wherein the at least two of the plurality of channel measurement resource sets contain different Channel State Information Reference Signal (CSI-RS) resources or the at least two of the plurality of channel measurement resource sets contain different port groups of the same CSI-RS resource.

3. The method according to claim 1 or 2, wherein the method further comprises:

   in a case where the reporting quantities of the plurality of channel measurement resource sets are the same, determining one first window starting position for the plurality of channel measurement resource sets, wherein the first window starting position is a starting position of a frequency domain window, and a quantity of frequency domain basis vectors comprised in the frequency domain window is an integer multiple of the reporting quantity; and
   sending first indication information to the network device, wherein the first indication information is configured to indicate the first window starting position.

4. The method according to claim 3, wherein the first indication information is further configured to indicate positions of M-1 frequency domain basis vectors of at least one group of channel measurement resource sets, the M-1 frequency domain basis vectors belong to the frequency domain basis vectors comprised in the frequency domain window, and are different from a frequency domain basis vector corresponding to the first window starting position, M is the reporting quantity, M is a positive integer, and each group of channel measurement resource sets comprises at least one channel measurement resource set.

5. The method according to claim 3, wherein the first indication information comprises a first part and a second part; and
   the first part comprises a position of the same frequency domain basis vector corresponding to the plurality of channel measurement resource sets, and the second part comprises positions of different frequency domain basis vectors corresponding to each channel measurement resource set.

**6.** The method according to claim 1 or 2, wherein the method further comprises:

determining at least two second window starting positions for the plurality of channel measurement resource sets, wherein each second window starting position corresponds to at least one channel measurement resource set, the second window starting position is a starting position of a frequency domain window, and a quantity of frequency domain basis vectors comprised in the frequency domain window is an integer multiple of the reporting quantity; and
sending second indication information to the network device, wherein the second indication information is configured to indicate the at least two second window starting positions.

**7.** The method according to claim 6, wherein the second indication information is configured to indicate absolute positions of the at least two second window starting positions.

**8.** The method according to claim 6, wherein the second indication information is configured to indicate an absolute position of a reference window starting position among the at least two second window starting positions.

**9.** The method according to claim 8, wherein the reference window starting position is an earliest starting position among the at least two second window starting positions.

**10.** The method according to claim 8, wherein the second indication information is further configured to indicate a port group identifier of a CSI-RS resource or a CSI-RS resource identifier or a resource set identifier corresponding to a channel measurement resource set corresponding to the reference window starting position.

**11.** The method according to any one of claims 8 to 10, wherein the second indication information is further configured to indicate another second window starting position except the reference window starting position, and the other second window starting position is a relative position relative to the reference window starting position.

**12.** The method according to any one of claims 6 to 11, wherein:

in a case where the reporting quantities of the plurality of channel measurement resource sets are the same, the second indication information is further configured to indicate positions of M-1 frequency domain basis vectors respectively corresponding to each of at least one group of channel measurement resource sets, the M-1 frequency domain basis vectors belong to frequency domain basis vectors comprised in a frequency domain window corresponding to each channel measurement resource set, and are different from a frequency domain basis vector corresponding to a second window starting position corresponding to each group of channel measurement resource sets, each group of channel measurement resource sets comprises at least one channel measurement resource set, M is the reporting quantity, and M is a positive integer; or
in a case where the reporting quantities of the at least two of the plurality of channel measurement resource sets are different, the second indication information is further configured to indicate the positions of the M-1 frequency domain basis vectors respectively corresponding to each of the at least one group of channel measurement resource sets, the M-1 frequency domain basis vectors belong to the frequency domain basis vectors comprised in the frequency domain window corresponding to each channel measurement resource set, and are different from the frequency domain basis vector corresponding to the second window starting position corresponding to each group of channel measurement resource sets, each group of channel measurement resource sets comprises the at least one channel measurement resource set, M is a reporting quantity of each group of channel measurement resource sets, and M is a positive integer.

**13.** The method according to any one of claims 1 to 12, wherein the configuration signaling is further configured to indicate reporting quantities of a plurality of transmission layers, the reporting quantities of the plurality of transmission layers are the same, or reporting quantities of at least two of the plurality of transmission layers are different.

**14.** A method for indicating a reporting quantity, performed by a network device, and comprising:
sending a configuration signaling to a terminal, wherein the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

15. The method according to claim 14, wherein the at least two of the plurality of channel measurement resource sets contain different Channel State Information Reference Signal (CSI-RS) resources or the at least two of the plurality of channel measurement resource sets contain different port groups of the same CSI-RS resource.

16. The method according to claim 14 or 15, wherein the method further comprises:
receiving first indication information sent by the terminal, wherein the first indication information is configured to indicate a first window starting position, the first window starting position is one first window starting position determined by the terminal for the plurality of channel measurement resource sets in a case where the reporting quantities of the plurality of channel measurement resource sets are the same, the first window starting position is a starting position of a frequency domain window, and a quantity of frequency domain basis vectors comprised in the frequency domain window is an integer multiple of the reporting quantity.

17. The method according to claim 16, wherein the first indication information is further configured to indicate positions of M-1 frequency domain basis vectors of at least one group of channel measurement resource sets, the M-1 frequency domain basis vectors belong to the frequency domain basis vectors comprised in the frequency domain window, and are different from a frequency domain basis vector corresponding to the first window starting position, M is the reporting quantity, M is a positive integer, and each group of channel measurement resource sets comprises at least one channel measurement resource set.

18. The method according to claim 16, wherein the first indication information comprises a first part and a second part; and
the first part comprises a position of the same frequency domain basis vector corresponding to the plurality of channel measurement resource sets, and the second part comprises positions of different frequency domain basis vectors corresponding to each channel measurement resource set.

19. The method according to claim 14 or 15, wherein the method further comprises:
receiving second indication information sent by the terminal, wherein the second indication information is configured to indicate at least two second window starting positions, each second window starting position corresponds to at least one channel measurement resource set, and the at least two window starting positions are determined by the terminal for the plurality of channel measurement resource sets.

20. The method according to claim 19, wherein the second indication information is configured to indicate absolute positions of the at least two second window starting positions in a frequency domain window.

21. The method according to claim 19, wherein the second indication information is configured to indicate an absolute position of a reference window starting position among the at least two second window starting positions.

22. The method according to claim 21, wherein the reference window starting position is an earliest starting position among the at least two second window starting positions.

23. The method according to claim 21, wherein the second indication information is further configured to indicate a port group identifier of a CSI-RS resource or a CSI-RS resource identifier or a resource set identifier corresponding to a channel measurement resource set corresponding to the reference window starting position.

24. The method according to any one of claims 21 to 23, wherein the second indication information is further configured to indicate another second window starting position except the reference window starting position, and the other second window starting position is a relative position relative to the reference window starting position.

25. The method according to any one of claims 19 to 24, wherein:

in a case where the reporting quantities of the plurality of channel measurement resource sets are the same, the second indication information is further configured to indicate positions of M-1 frequency domain basis vectors respectively corresponding to each of at least one group of channel measurement resource sets, the M-1 frequency domain basis vectors belong to frequency domain basis vectors comprised in a frequency domain window corresponding to each channel measurement resource set, and are different from a frequency domain basis vector corresponding to a second window starting position corresponding to each group of channel measurement resource sets, each group of channel measurement resource sets comprises at least one channel measurement resource set, M is the reporting quantity, and M is a positive integer; or

in a case where the reporting quantities of the at least two of the plurality of channel measurement resource sets are different, the second indication information is further configured to indicate the positions of the M-1 frequency domain basis vectors respectively corresponding to each of the at least one group of channel measurement resource sets, the M-1 frequency domain basis vectors belong to the frequency domain basis vectors comprised in the frequency domain window corresponding to each channel measurement resource set, and are different from the frequency domain basis vector corresponding to the second window starting position corresponding to each group of channel measurement resource sets, each group of channel measurement resource sets comprises the at least one channel measurement resource set, M is a reporting quantity of each group of channel measurement resource sets, and M is a positive integer.

26. The method according to any one of claims 14 to 25, wherein the configuration signaling is further configured to indicate reporting quantities of a plurality of transmission layers, the reporting quantities of the plurality of transmission layers are the same, or reporting quantities of at least two of the plurality of transmission layers are different.

27. An apparatus for indicating a reporting quantity, comprising:

a receiving module, configured to receive a configuration signaling sent by a network device, wherein the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

28. An apparatus for indicating a reporting quantity, comprising:

a sending module, configured to send a configuration signaling to a terminal, wherein the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity.

29. A terminal, comprising:

a processor; and
a transceiver connected to the processor; wherein the processor is configured to load and execute executable instructions to implement the method for indicating the reporting quantity according to any one of claims 1 to 13.

30. A network device, comprising:

a processor; and
a transceiver connected to the processor; wherein the processor is configured to load and execute executable instructions to implement the method for indicating the reporting quantity according to any one of claims 14 to 26.

31. A communication system, comprising a terminal and a network device, wherein the terminal is configured to implement the method for indicating the reporting quantity according to any one of claims 1 to 13, and the network device is configured to implement the method for indicating the reporting quantity according to any one of claims 14 to 26.

32. A computer-readable storage medium having executable program codes stored thereon, wherein the executable program codes are loaded and executed by a processor to implement the method for indicating the reporting quantity according to any one of claims 1 to 26.

Sub-
band

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|----|----|----|----|----|----|----|----|----|----|----|----|----|----|----|
| 1 | | | | | | | | | | | | | | | | | | | | | | | | |
| 2 | | | | | | | | | | | | | | | | | | | | | | | | |
| 3 | | | | | | | | | | | | | | | | | | | | | | | | |
| 4 | | | | | | | | | | | | | | | | | | | | | | | | |
| 5 | | | | | | | | | | | | | | | | | | | | | | | | |
| 6 | | | | | | | | | | | | | | | | | | | | | | | | |
| 7 | | | | | | | | | | | | | | | | | | | | | | | | |
| 8 | | | | | | | | | | | | | | | | | | | | | | | | |

Spatial Domain

FIG. 1

Network device ~ 20

Network device ~ 20

Terminal ~ 10

FIG. 2

Terminal

Network device

Step 301: the network device sends a configuration signaling to the terminal, the configuration signaling is configured to indicate reporting quantities of a plurality of channel measurement resource sets, the reporting quantities of the plurality of channel measurement resource sets are the same, or reporting quantities of at least two of the plurality of channel measurement resource sets are different, and the reporting quantity is a quantity of frequency domain basis vectors reported by the terminal for a channel measurement resource set corresponding to the reporting quantity

Step 302: the terminal receives the configuration signaling sent by the network device

FIG. 3

Terminal

Network
device

Step 401: in a case where reporting quantities of a plurality of
channel measurement resource sets are the same, the terminal
determines one first window starting position for the plurality of
channel measurement resource sets, this first window starting
position is a starting position of a frequency domain window, and
a quantity of frequency domain basis vectors included in the
frequency domain window is an integer multiple of the reporting
quantity

Step 402: the terminal sends first indication
information to the network device, and the first
indication information is configured to indicate
the first window starting position

Step 403: the network device receives the first indication
information sent by the terminal, the first indication
information is configured to indicate the first window
starting position, and the first window starting position is a
first window starting position determined by the terminal for
the plurality of channel measurement resource sets in a case
where the reporting quantities of the plurality of channel
measurement resource sets are the same

FIG. 4

Terminal

Network
device

Step 501: the terminal determines at least two second
window starting positions for a plurality of channel
measurement resource sets, each second window starting
position corresponds to at least one channel measurement
resource set, the second window starting position is a starting
position of a frequency domain window, and a quantity of
frequency domain basis vectors included in the frequency
domain window is an integer multiple of a reporting quantity

Step 502: the terminal sends second indication
information to the network device, and the
second indication information is configured to
indicate the at least two second window starting
positions corresponding to the plurality of
channel measurement resource sets

Step 503: the network device receives the second indication
information sent by the terminal

FIG. 5

Receiving
module 601

FIG. 6

Receiving
module 601

Processing
module 602

Sending module 603

FIG. 7

Sending module 801

FIG. 8

Sending module 801

Receiving
module 802

FIG. 9

Processor 1001

Transmitter 1003

Bus 1005

Receiver 1002

Memory 1004

FIG. 10

## INTERNATIONAL SEARCH REPORT

| International application No. |
| --- |
| **PCT/CN2022/109168** |

| | |
| --- | --- |
| **A.** | **CLASSIFICATION OF SUBJECT MATTER** |
| | H04L5/00(2006.01)i;H04W24/10(2009.01)i;H04W72/04(2023.01)i |

According to International Patent Classification (IPC) or to both national classification and IPC

| | |
| --- | --- |
| **B.** | **FIELDS SEARCHED** |

Minimum documentation searched (classification system followed by classification symbols)

    IPC: H04L, H04W

Documentation searched other than minimum documentation to the extent that such documents are included in the fields searched

Electronic data base consulted during the international search (name of data base and, where practicable, search terms used)

    CNTXT, CNKI, ENTXTC, VEN, ENTXT, 3GPP: 信道, 测量, 信道状态信息, 上报, 频域, 分量, 基向量, 数量, 数目, 配置, 指示, 位置, channel, measure, CSI, report, frequency domain, FD, basis, vector, number, configure, indicate, position

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 112751592 A (HUAWEI TECHNOLOGIES CO., LTD.) 04 May 2021 (2021-05-04) description, paragraphs [0158], [0208]-[0324], and [0358]-[0378], and figures 1-10 | 1-32 |
| X | WO 2020164160 A1 (GUANGDONG OPPO MOBILE COMMUNICATIONS CO., LTD.) 20 August 2020 (2020-08-20) description, page 3 line 1 to page 9 line 10 | 1, 2, 13, 14, 15, 26-32 |
| X | US 2021099211 A1 (SAMSUNG ELECTRONICS CO., LTD.) 01 April 2021 (2021-04-01) description, paragraphs [0129]-[0166] | 1, 2, 13, 14, 15, 26-32 |
| X | CN 113840324 A (HUAWEI TECHNOLOGIES CO., LTD.) 24 December 2021 (2021-12-24) description, paragraphs [0163]-[0191] | 1, 2, 13, 14, 15, 26-32 |
| A | CN 111756422 A (HUAWEI TECHNOLOGIES CO., LTD.) 09 October 2020 (2020-10-09) entire document | 1-32 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 March 2023** | **23 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| International application No. |
| :-- |
| **PCT/CN2022/109168** |

| Patent document cited in search report | | | Publication date (day/month/year) | Patent family member(s) | | | Publication date (day/month/year) |
| :-- | :-- | :-- | :-- | :-- | :-- | :-- | :-- |
| CN | 112751592 | A | 04 May 2021 | None | | | |
| WO | 2020164160 | A1 | 20 August 2020 | US | 2021367656 | A1 | 25 November 2021 |
| | | | | EP | 3907898 | A1 | 10 November 2021 |
| | | | | EP | 3907898 | A4 | 09 February 2022 |
| US | 2021099211 | A1 | 01 April 2021 | US | 2022360308 | A1 | 10 November 2022 |
| | | | | WO | 2021066497 | A1 | 08 April 2021 |
| | | | | KR | 20220075397 | A | 08 June 2022 |
| | | | | US | 11387884 | B2 | 12 July 2022 |
| CN | 113840324 | A | 24 December 2021 | None | | | |
| CN | 111756422 | A | 09 October 2020 | None | | | |

Form PCT/ISA/210 (patent family annex) (July 2022)